# EUROPEAN PATENT APPLICATION

(11) **EP 4 823 087 A1**
(43) Date of publication of application: **14.10.2026**
(21) Application number: 25170151.2
(22) Date of filing: 11.04.2025
(51) Int. Cl.: H04N 7/14, G06F 40/20, G06F 40/35, G06V 40/20, H04N 7/15

(54) **METHOD AND SYSTEM FOR IMPROVING DIALOGUE FLOW IN HYBRID ONLINE CONFERENCES**

(71) Applicant: Mitel Networks Corporation, Ottawa, Ontario K2K 3K1 (CA)
(72) Inventor: Tsiatsikas, Zisis, 55534 Thessaloniki (GR); Lederer, Thomas, 82211 Herrsching (DE)
(74) Representative: Schaafhausen, Anne

(57) **Abstract**

The invention relates to a method and a system to improve dialogue flow in hybrid online meetings. The invention focuses on enhancing the user experience for physical and remote participants in hybrid meetings. By highlighting segments of the presentation which are described verbally or pointed at by the participants (physical or remote) and the synchronization of those segments in the presentation document, the inclusivity of remote participants is efficiently enhanced. The user experience is increased and spoken collisions are avoided.

## Description

The present invention relates to a method for improving dialogue flow in hybrid online meetings, and a system for performing the method.

Hybrid online conferences are common in business, education, and large conferences where a mix of remote and in-person participants is found. However, these kinds of meetings pose significant challenges. The way and the capabilities of communication for the physically present participants usually outperform those of the remote users. Remote participants in hybrid meetings face significant challenges in following presentations as effectively as those attending in person, especially when the presenter is standing in front of a large screen and pointing at specific segments of the presentation. The remote participants cannot see which pieces of information the presenter is pointing at and even if they have access to a video stream of the room, typically the presentation via room video feed is not clearly readable as it is displayed in low resolution or on a small screen. The inability to clearly see what the presenter is referencing, coupled with limitations in audio-visual technology, reduces the remote participants' ability to engage in the meeting, understand the content and perform timely interventions amid discussions that take place in the physical room. This disparity often results in decreased inclusivity, lower engagement, and potential misunderstandings by the remote participants, ultimately impacting the productivity and effectiveness of hybrid meetings. Addressing this issue is essential to creating a more equitable and collaborative meeting environment.

Solutions in the art describe methods to effectively visualize content that was spoken or pointed at by a participant/presenter. However, the approaches described in the prior art fail to address the aspect of synchronizing the remote participants' words and/or gestures with the discussion flow in the physical room where the meeting takes place.

Thus, there is a need in the art to overcome the drawbacks of the state of the art and to provide an approach for improving dialogue flow in hybrid online meetings to enhance the user experience of remote participants and to increase dialogue flow efficiency.

Therefore, the present invention is based on the object to provide a method for improving dialogue flow and a corresponding system which is configured to perform the inventive method.

In particular, a method and a system for improved dialogue flow in hybrid online meetings are provided, wherein video and/or screen sharing streams are utilized, and the productivity and effectiveness between the physical and remote participants are increased.

This object is solved by a method having the features according to claim 1 and a system having the features of claim 11.

Preferred embodiments of the invention are defined in the respective dependent claims.

According to the invention, a method for improving dialogue flow in hybrid online conferences is provided, the method comprising the steps of:
- starting, by a presenter, a hybrid online conference;
- capturing, by a capture module, words and gestures from the presenter and/or one or more physical participants, in case screen sharing of the presentation takes place;
- analyzing, by a Natural Language Processing (NLP) module, the spoken words;
- analyzing, by an object recognition engine, the gestures;
- correlating, by a simple Language Model, data from the previous steps with presentation segments, in case there is no ongoing discussion in the meeting;
- highlighting, by a highlighting module, the correlated presentation segments in the screen sharing stream, in case the data are found in the presentation;
- ending the method.

According to a preferred embodiment, the object recognition engine comprises a camera, a wearable device and/or a sensor.

According to another preferred embodiment, the steps of analyzing the spoken words and the gestures are performed in parallel.

According to still another preferred embodiment, gestures are selected from finger, hand, head and/or eyes/gaze pointing.

According to yet another preferred embodiment, if no object recognition engine is present in the devices, the data processing for gesture recognition may be done at a conference server.

According to yet another preferred embodiment, the method further comprises:
- opening, by at least one client device, the presentation on the at least one client device, in case no screen sharing of the presentation takes place;
- synchronizing, by a synchronization module, the at least one client device with the physical presentation;
- repeating the steps of capturing words and gestures from the presenter and/or the one or more physical participants, analyzing the words and gestures, correlating said data with presentation segments, highlighting the correlated data in the screen sharing stream and ending the method.

According to still another preferred embodiment, the at least one client device is a computing device, selected from a personal computer (PC), a laptop, a tablet and/or a smartphone.

Further, according to a preferred embodiment, the method further comprises: repeating the steps of correlating the analyzed data with presentation segments, highlighting the correlated data in the screen sharing stream and ending the method, in case a discussion is ongoing in the room, but the one or more remote participant(s) do not try to take part in the discussion.

According to yet another preferred embodiment, the method further comprises:
- correlating, by the simple Language Model, gestures and/or words by the one or more remote participant(s) with the active discussion, in case there is an ongoing discussion in the room and the one or more remote participant(s) do try to take part in it;
- injecting, by a conference server, the contribution of the one or more remote participant(s) to the discussion at an appropriate time;
- repeating the steps of correlating the analyzed data with presentation segments, highlighting the correlated data in the screen sharing stream and
- ending the method.

In the meaning of the present invention, the conference server may capture the audio from the remote participants, for example, a clip of 10 seconds, expressing an opinion.

According to still another preferred embodiment, an appropriate time for injecting the contribution of the one or more remote participant(s) to the ongoing discussion is at a predefined speaking pause of the physical participant(s). Preferably, the speaking pause is from 4 to 10 seconds, more preferably from 4 to 8 seconds and most preferably from 4 to 6 seconds.

Yet, according to another preferred embodiment, the contribution of the one or more remote participant(s) is selected from audio or physical interaction. Preferably, said physical interactions are gestures like pointing with a finger and/or hand to or looking at a segment of the presentation.

According to yet another preferred embodiment of the present invention, the audio captured from the remote participant is injected through at least one speaker.

In still another preferred embodiment, the method further comprises:
- analyzing, by the object recognition engine and the NLP module, the gestures and words by the presenter and/or the one or more participant(s), in case no correlated data with presentation segments are found;
- repeating the steps of correlating the analyzed data with presentation segments, highlighting the correlated data in the screen sharing stream and
- ending the method.

According to another aspect of the invention, a system for improved dialogue flow in hybrid conference meetings is provided, the system being configured to perform the method for improving dialogue flow of hybrid conference meetings.

According to a preferred embodiment, the system comprises:
- a conference server;
- at least one object recognition engine;
- at least one projector;
- at least one speaker;
- at least one projection whiteboard;
- at least one NLP module;
- at least one simple Language Model;
- at least one synchronization module;
- at least one highlighting module;
- at least one local device; and/or
- at least one client device.

According to another preferred embodiment, the at least one recognition engine comprises a camera, a wearable device and/or a sensor.

According to still another preferred embodiment, the at least one local device comprises a speaker and/or a projector.

According to another preferred embodiment, the local device is connected to one or more object recognition engines.

According to still another preferred embodiment, the at least one object recognition engine is covering the meeting room, the presenter, the physical participants and the presentation screen.

Further, according to a preferred embodiment, the at least one client device is selected from a PC, a laptop, a tablet and/or a smartphone.

According to yet another preferred embodiment, the presenter of the meeting is moving in the meeting room in a distance of x meters. Preferably, the distance is 2 to 5 meters, more preferably 2 to 4 meters, and most preferably 2 to 3 meters.

The present invention provides a method and a system for improving dialogue flow in hybrid online conferences by enhancing the user experience both for the physical and the remote participants. This is achieved by including the remote participants in a meaningful way as they do not lose missing bits from the physical room the conference is held in. Further, comments to the discussion from the remote participants are timely injected into the discussion by the inventive system so that remote participants do not have to interrupt the physical participants and assume when it is an appropriate time to speak. Thus, segments of the presentation which are described verbally or pointed at by the physical and/or remote participants are highlighted and synchronized, which enhances the inclusivity of remote participants. Words spoken by the remote participants are injected into the discussion and transformed into highlighted segments when there is an empty time in the discussion, i.e. a pause of the physical participants.

The present invention thus provides effective highlighting of the spoken information and/or the information shared by physical interaction, especially in scenarios where a screen sharing option is missing from the physical room and the meeting is broadcast only using a camera. Due to the highlighting synchronization provided with the present invention, the user experience is enhanced, especially in case multiple participants speak at the same time, e.g. in conflicts between remote and physical participants.

It has also to be noted that aspects of the invention have been described with reference to different subject matters. In particular, some aspects or embodiments have been described with reference to system type claims, whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular combinations between features relating to the system type claims and features relating to the method type claims are considered to be disclosed. In addition, features relating to one of the embodiments may be combined with other features of another embodiment, the drawings or the claims, where possible. The invention and embodiments thereof will be described below in further detail in connection with the drawing(s).

In the meaning of the present invention, the term "hybrid online conference" refers to a meeting format that combines both in-person and virtual participation. It allows participants to join from a physical location while others connect remotely via video conferencing tools. Thus, some participants are physically present, while others join remotely online.

In the meaning of the present invention, the terms "user", "attendee" and "participant" are used interchangeably throughout the present description to refer to an individual who takes part in a meeting, either actively or passively. Participants/attendees may be physically present or join remotely.

In the meaning of the present invention, the term "physical participant" refers to an individual attending a conference/meeting in person.

In the meaning of the present invention, the term "module" refers to a self-contained unit of code, functionality, or a component within a larger system. It is designed to perform a specific function and can be independently developed, tested, and/or integrated into a larger application or system. A module according to the present invention may be part of the conference server, may be part of one another or may be designed independently.

In the sense of the present invention, a simple Language Model may be part of an NLP module or an object recognition engine or may be designed independently. According to the present invention, the object recognition engine may analyze images to identify gestures from the presenter, the physical participant(s) and/or the remote participant(s). The gestures may be combined with the words spoken by the participants of the online meeting analyzed by the NLP and then a simple Language Model may correlate said information to identify the parts of the physical presentation that need to be highlighted.

In the meaning of the present invention, the term "object recognition engine" refers to a software or hardware system that detects, identifies, and classifies objects within images or video streams. It uses computer vision and artificial intelligence (AI) techniques, such as deep learning, to analyze visual data and recognize specific objects, patterns, gestures or features.

Further, the object recognition engine may detect the motion and orientation of the participant(s) of the online meeting. According to the present invention, the object recognition engine comprises a camera, a wearable device and/or a sensor. The wearable device may be selected from Al-Powered Smart Glasses, Smartwatches & Wristbands, Al Gesture Control Armbands and/or Al Gesture Control Rings. The sensor may be selected from gyrometers and/or accelerometers.

In the meaning of the present invention, the term "natural language processing (NLP)" refers to a branch of Al that enables computers to understand, interpret, generate, and respond to human language in a meaningful way. It combines linguistics, machine learning, and computer science to process text and speech data.

In the meaning of the present invention, the terms "conference" and "meeting" are used interchangeably throughout the present description to refer to a planned gathering of two or more people to discuss, collaborate, or make decisions on a specific topic.
- Fig. 1: shows a flowchart of the method for improved dialogue flow in hybrid online conferences according to an embodiment of the invention;
- Fig. 2: shows a schematic illustration of the method for improved dialogue flow in hybrid online conferences according to another embodiment of the invention;
- Fig. 3: shows a schematic illustration of the method for improved dialogue flow in hybrid online conferences according to another embodiment of the invention.

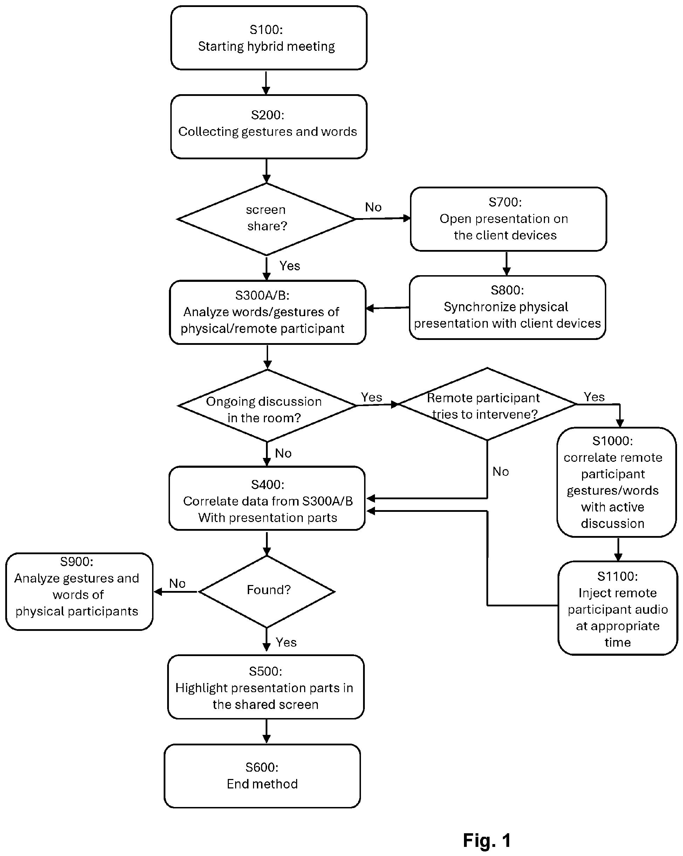

Fig. 1 shows a flowchart of the steps of the method for improving dialogue flow in hybrid meetings according to an embodiment of the present invention. In step S100, a presenter of a hybrid meeting may start said meeting. If screen sharing is used, a module may capture any words and gestures from the presenter, any participants physically attending said meeting, and/or any remote participants upon starting the meeting, considering a specific time frame (step S200). The time frame may be selected from every 3 to 30 seconds, preferably every 10 to 30 seconds, more preferably every 5 to 15 seconds and most preferably every 3 to 8 seconds. In step S300A, an NLP module may be used to analyze the spoken words in order to perceive their semantic meaning. In parallel, in step S300B, an object recognition engine may analyze the video feed in order to identify gestures performed by the presenter and/or the one or more physical participants. The object recognition engine according to the present invention may be a camera, a wearable device and/or a sensor in the room. If no discussion is ongoing in the room, the data from the analysis in steps S300A and S300B may be correlated to presentation segments in step S400 by a simple Language Model. If said data can be correlated to presentation segments, said segments may get highlighted in the screensharing stream by a highlighting module in step S500. Said highlighted segments may be viewed both by the remote participant(s) and the physical participant(s). In step S600, the method ends.

In case there is no screen sharing taking place, the presentation may get opened in the at least one client device of the one or remote participant(s) in step S700 upon a request being sent from the conference server to the at least one client device. In step S800, the at least one client device may get synchronized with the physical presentation by a synchronization module. After the synchronization, steps S300A to S600 may get repeated. In case there is an ongoing discussion in the room, but the remote participant(s) do(es) not want to take part in said discussion, steps S400 to S600 may get repeated. In case there is an ongoing discussion in the room and the remote participant(s) do(es) want to take part in the discussion, in step S1000, a simple Language Model may correlate the gestures and/or words by the remote participant(s) with the active discussion. The conference server may capture the audio from the remote participant(s), for example, a clip of 10 seconds, expressing an opinion. When the conference server detects silence more than a predefined speaking pause in the physical room, it may play the captured audio through the speakers. In this way the remote participant injects his/her contribution without interrupting the discussion. At the same time, the highlighting module may reflect the remote participant's gestures which are also conveyed to the physical participants by highlighting the corresponding parts in the presentation.

In step S1100, the spoken words by the remote participant(s) may be injected into the physical room in a timely manner to avoid spoken conflicts amid an active discussion in the physical room. The gestures of the remote participant(s) may be injected into the physical room by analyzing them by an object recognition engine as defined above, which may analyze the images from the remote participant(s) to detect any gestures of said participant(s). In case the client device(s) are not equipped with an object recognition engine, the data processing for gesture recognition may be done by the conference server. Steps S400 to S600 may get repeated. According to the present invention, the highlighting module may be enhanced to prevent multiple segments to be highlighted at the same time (e.g. in case two or more participants speak at the same time), as this may create frustration for remote participants.

In case after step S400 no correlation of the analyzed data (words and/or gestures) can be found in the presentation, in step S900, the gestures and words of the audience, i.e. the physical participants may get analyzed by the NLP module and the objection recognition engine of the inventive system. Said data may again get correlated in step S400, and steps S500 and S600 may get repeated.

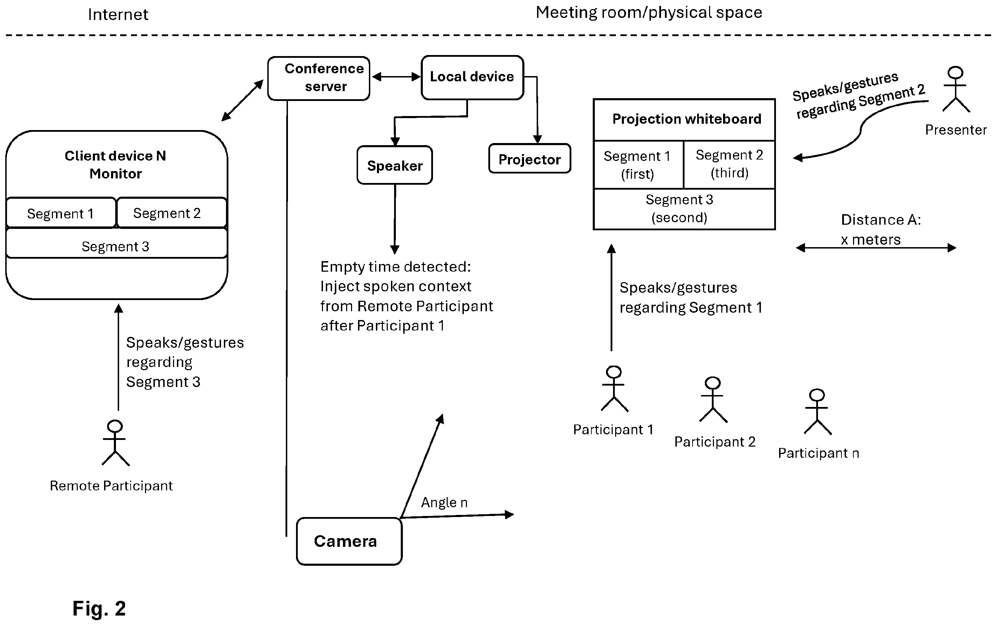

Fig. 2 shows a schematic illustration of the method for improving dialogue flow in hybrid conference meetings according to another embodiment of the invention. In the embodiment depicted in Fig. 2, only a video stream is used, while a screensharing stream is not supported. It may be assumed that the presentation has already been shared with the at least one client device prior to the meeting. After the session is initiated, a request from the conference server may be sent to the at least one client device which may automatically open the relevant document and automatically advance to the slide/page the presenter is showing in the room. The local device located in the room the hybrid meeting is held in may be used to handle the presentation content (e.g., the slide deck) and this information may be conveyed back to the conference server that may run a synchronization module. This module may send signals/triggers to the at least one remote client device so that the presentation copies shown in the at least one client device are following the actual presentation. The remaining steps of analyzing the words and gestures, correlating the content with presentation segments, highlighting the correlated data which matches the context are as mentioned above.

According to the present invention, there are entities of the inventive system that reside in the web, namely the client devices, connected to a conference server that resides either in the cloud or on prem. In the physical space, a local device connected to one or more cameras or sensors may cover the physical space, the presenter, the audience (i.e. the participants physically attending the meeting) and the presentation screen. The presentation may be projected on a projection whiteboard by a projector which is connected to the local device. Also connected to the local device may be a speaker. The presenter of the meeting may not be standing in a fixed position during the meeting. She/he may move around the room in a distance of x meters. The data gathered from the meeting may be sent to the conference server using the camera and the local device. In Fig. 2, the presenter speaks about Segment 2 of the presentation and may point at the upper level of the presentation screen, wherein Segment 2 is displayed. The object recognition engine may analyze the picture from the video stream to track possible gestures. The gesture of the presenter (pointing at the upper part of the presentation) may be identified as a deictic gesture, e.g. pointing with a finger from a distance of 2 to 3 meters.

According to yet another embodiment of the present invention not depicted in Fig. 2, presentation segments may need to be highlighted for the physical participants when a remote participant tries to describe certain segments. The inventive method may be used in the same way as described above, with the difference that the words and gestures of the remote participants may get analyzed, correlated and highlighted for the physical participants.

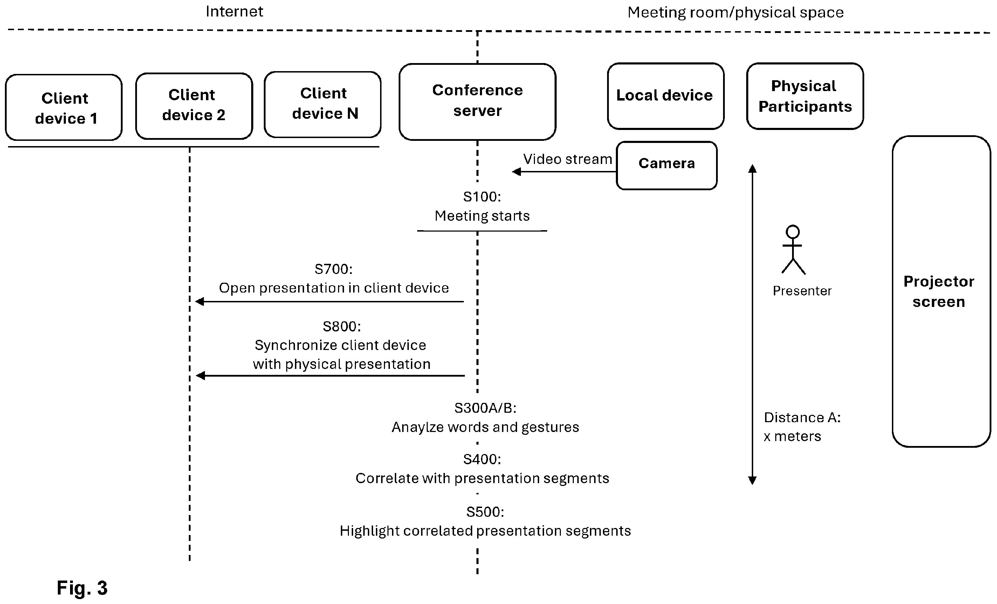

Fig. 3 shows a schematic illustration of the method for improving dialogue flow in hybrid online conferences according to still another embodiment of the invention.

As already mentioned above, in the inventive system, there are entities residing in the web, namely the client devices, depicted in Fig. 3 as Client device 1, Client device 2 and Client device N. Said devices are connected to a conference server that resides either in the cloud or on prem. In the physical space, a local device is present, being connected to one or more cameras which in turn cover the physical space, the presenter, the audience and the presentation screen. In the embodiment depicted in Fig. 3, only a video stream may be used, while a screensharing stream may not be supported. Thus, in step S100, the hybrid meeting may start. In step S700, a request is sent to the client devices to automatically open the relevant document, respectively. The presentations on the client devices are synchronized with the physical presentation. Thus, the client devices automatically advance to the slide/page, the presenter is showing in the room. Following said steps, the general steps mentioned above may be applied (steps S300A, S300B, S400 to S600).

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

| | | |
|---|---|---|
| 1 | S100 - S1100 | method steps |
| 2 | NLP | Natural Language Processing |
| 3 | Al | Artificial Intelligence |
| 4 | x | variable natural number |
| 5 | N | variable natural number |
| 6 | PC | Personal Computer |

## Claims

1. A method for improving dialogue flow in hybrid online conferences, wherein the method comprises the steps of:
- S100 starting, by a presenter, a hybrid online conference;
- S200 capturing, by a capture module, words and gestures from the presenter and/or one or more physical participants, in case screen sharing of the presentation takes place;
- S300A analyzing, by a Natural Language Processing, NLP, module, the spoken words of step S200;
- S300B analyzing, by an object recognition engine, the gestures of step S200;
- S400 correlating, by a simple Language Model, data from steps S300A and S300B with presentation segments, in case there is no ongoing discussion in the meeting;
- S500 highlighting, by a highlighting module, the correlated presentation segments in the screen sharing stream, in case the data of step S400 are found in the presentation;
- S600 ending the method.

2. The method according to claim 1, wherein the object recognition engine comprises a camera, wearable device and/or a sensor.

3. The method according to claim 1, wherein steps 300A and 300B are performed in parallel.

4. The method according to claim 1, wherein the method further comprises:
- S700 opening, by at least one client device, the presentation on the at least one client device, in case no screen sharing of the presentation takes place;
- S800 synchronizing, by a synchronization module, the at least one client device with the physical presentation;
- repeating steps S200 to S600.

5. The method according to claim 3, wherein the at least one client device is a computing device, selected from a personal computer, PC, a laptop, a tablet and/or a smartphone.

6. The method according to any one of the preceding claims, wherein the method further comprises:
- repeating steps S400 to S600, in case a discussion is ongoing in the room, but the one or more remote participant(s) do not try to take part in the discussion.

7. The method according to any one of the preceding claims, wherein the method further comprises:
- S1000 correlating, by the simple Language Model, gestures and/or words by the one or more remote participant(s) with the active discussion, in case there is an ongoing discussion in the room and the one or more remote participant(s) do try to participate;
- S1100 injecting, by a conference server, the contribution of the one or more remote participant(s) to the discussion at an appropriate time;
- repeating steps S400 to S600.

8. The method according to claim 7, wherein an appropriate time for injecting the contribution of the one or more remote participant(s) to the ongoing discussion is at a predefined speaking pause of the one or more physical participant(s).

9. The method according to claims 7 and 8, wherein the contribution of the one or more remote participant(s) is selected from audio and/or physical interaction.

10. The method according to any one of the preceding claims, wherein the method further comprises:
- S900 analyzing, by the object recognition engine and the NLP module, the gestures and words by the one or more physical participant(s), in case no correlation of the data of step S300A and S300B with presentation segments are found;
- repeating steps S400 to S600.

11. A system for improving dialogue flow in hybrid conference meetings, wherein the system is configured to perform the method for improving dialogue flow in hybrid conference meetings according to any of the claims 1 to 10.

12. The system according to claim 11, wherein the system comprises:
- a conference server,
- at least one object recognition engine;
- at least one projector;
- at least one speaker;
- at least one projection whiteboard;
- at least one NLP module;
- at least one simple Language Model;
- at least one synchronization module;
- at least one local device; and/or
- at least one client device.

13. The system according to claim 11, wherein the at least one recognition engine comprises a camera, a wearable device and/or a sensor.

14. The system according to claim 11, wherein the at least one local device comprises a speaker and/or a projector.

15. The system according to claim 11, wherein the at least one client device is selected from a PC, a laptop, a tablet and/or a smartphone.
